# EUROPEAN PATENT APPLICATION

(11) **EP 1 276 318 A1**
(43) Date of publication of application: **15.01.2003**
(21) Application number: 01830778.5
(22) Date of filing: 19.12.2001
(51) Int. Cl.: H04N 5/445, H04N 7/173

(54) **Method and apparatus for transmitting, receiving and displaying information in an interactive television system**

(30) Priority: 13.07.2001 EP 01830467
(71) Applicant: Tv-Lab S.p.a., 31033 Castelfranco Veneto (Prov. of Treviso) (IT)
(72) Inventor: Vazzoler, Alberto, 98000 Montecarlo (MC); Straus, Stefano, 31033 Castelfranco, (Prov. of Treviso) (IT)
(74) Representative: Modiano, Guido, Dr.-Ing.

(57) **Abstract**

A receiving apparatus, particularly a set top box, is provided with a receiver for receiving an analog and/or digital television signal which comprises audiovisual data and service data, a device for exchanging information data over a data communications network, and a processing unit capable of processing the service data and the information data in order to display differentiated information on a plurality of display and control means, according to a selected and customizable user profile. The service data can be encoded as an audio signal that is not detectable by the human ear within the television signal itself.

## Description

The present invention relates to a method and an apparatus applied to the field of interactive television, with particular reference to techniques for encoding, analyzing and using additional information contained in the television signal transmitted by a station in a conventional, analog or digital manner, together with the audiovisual data related to the television programs being broadcast.

In particular, the described system relates to a receiving apparatus, such as a set top box, which has an interface for communicating with an external data communications network that can be navigated by the user and a communications device capable of sending information and receiving commands from a plurality of display and control means.

The expression "interactive television" is understood to designate a reception system, hereinafter designated generically by the expression "set top box", which is capable of receiving the standard or dedicated television signal, transmitted in digital or analog form, and of processing the received information automatically or in a controlled manner in order to provide the user with additional information with respect to what would be reproduced with a conventional television set.

In particular, with the diffusion of the Internet and the improvement of data communications networks in general, various set top boxes that are currently available are capable of acting both as receivers for television signals and as devices for navigating the network.

Among these, set top boxes are known which are capable of receiving and displaying simultaneously on the television screen television programs and data arriving from the Internet, allowing the user to navigate the various sites while continuing to view the television program to which the set top box is tuned, by virtue of known electronic circuits that mix the various signals into a single picture.

The technology that allows to display a frame containing information that arrives from a first source together with information that arrives from a second source is generically designated herein by the acronym PIP (Picture In Picture). Substantially, the information that arrives from the first source is displayed in a first frame of the screen, while the information that arrives from the second source is displayed in one or more different areas. By using PIP technology it is of course possible to obtain several frames and display information that arrives from even more than two sources.

A first goal that is strongly felt in the field of interactive television is therefore to allow the user to display information that is correlated with what is currently being transmitted by the television channel and to personally control the type of information he is interested in.

One of the main problems encountered in performing this correlation is the identification of the television program to which the set top box is tuned at a given instant, regardless of the type of signal received, whether analog or digital.

A second problem that heavily affects the state of the art regarding interactive television systems is the heterogeneous nature of the audience that sits simultaneously in front of the screen of a same television set and the fact that television is a one-to-many device: a single screen viewed simultaneously by many users.

For example, in a domestic environment, as well as in hotels or ordinary meeting places, the interests of each one of the individuals sitting in front of the television set vary considerably, making it virtually impossible to summarize on a single screen the information that each one of those individuals would like to display at a given moment. But even if the group of users is homogeneous, there is the problem that control over the corollary information rendered visible or navigable in an interactive television system remains in the hands of the single user who holds the control means of the set (remote control, keyboard, pointing system, et cetera), making it impossible to meet the request for information of the entire audience.

The aim of the present invention is to provide an advanced method and system for interactive television capable of overcoming the above described problems.

Within this aim, an object of the present invention is to provide a receiving apparatus, particularly a complete set top box or an additional module to be interfaced with existing set top boxes, which is capable of correctly decoding additional information contained in the transmitted television signal.

Another object of the present invention is to provide a receiving apparatus which is capable of processing and transferring to a plurality of display and control devices information received by means of a television signal and/or from external sources and of receiving commands from each one of the devices independently, decentralizing and customizing the services offered for each individual user.

Another object of the present invention is to transfer at least part of the received or processed information to a remote station over a dedicated communications channel, for statistical purposes for ratings companies, for informational purposes for users, retrieving information correlated to the television program to which the receiver is tuned, and for commercial purposes for acquiring advertising information.

This aim and these and other objects that will become better apparent hereinafter are achieved by a receiving apparatus for interactive television, comprising a set top box and a plurality of display and control devices, characterized in that the set top box comprises: a receiver, which is suitable to receive a television signal comprising video data, audio data and service data; a splitter, which is suitable to separate the audio/video data and the service data; first processing means, for generating a second signal whose content is based on decoded information contained in said service data; one or more local communications interfaces, suitable to transmit the second signal to the plurality of display and control devices.

Advantageously, the apparatus can further comprise second processing means for generating a third signal, whose content is based on information contained in the service data, and means for generating a video picture which comprises information contained in the video signal and in the third signal.

Conveniently, the receiving apparatus can comprise means of communication for exchanging information with a remote location over a data communications network, for example a server of a service provider or a website.

Conveniently, the second signal, which is differentiated according to the user profile and is transmitted to the plurality of display and control devices, and the third signal, which is directed to the main screen, can therefore comprise information processed starting from service data encoded in the television signal and from the information data received over the data communications network.

Furthermore, the second signal includes data which, once displayed on one of said display and control devices, can be selected by means of a pointing device in order to produce an exchange of data with a location that is located remotely with respect to said receiving apparatus, for example in order to navigate websites.

Further characteristics and advantages of the present invention will become better apparent from the following detailed description, given by way of non-limitative example and illustrated in the accompanying figures, wherein:
Figure 1 is a block diagram of an embodiment of the system according to the invention;
Figure 2 is a block diagram of the structure of a transmitting apparatus according to an embodiment of the system according to the invention;
Figure 3 is a block diagram of the structure of a receiving apparatus according to an embodiment of the system according to the invention;
Figure 4 is a block diagram of the main components of a display and control device according to the present invention and of a primary screen;
Figure 5 is a block diagram that shows in schematic detail a data communications network;
Figure 6 is a flowchart, which illustrates schematically the steps followed by the receiving apparatus in order to handle the data received in input and produced in output toward the main screen and the display and control devices;
Figure 7 is a view of some possible configurations of a display device on which areas are provided which are meant to display signals arriving from different sources and usable both on the main screen and on the screens of the display devices;
Figure 8 is a schematic view of an enclosed space in which the system according to the present invention is installed.

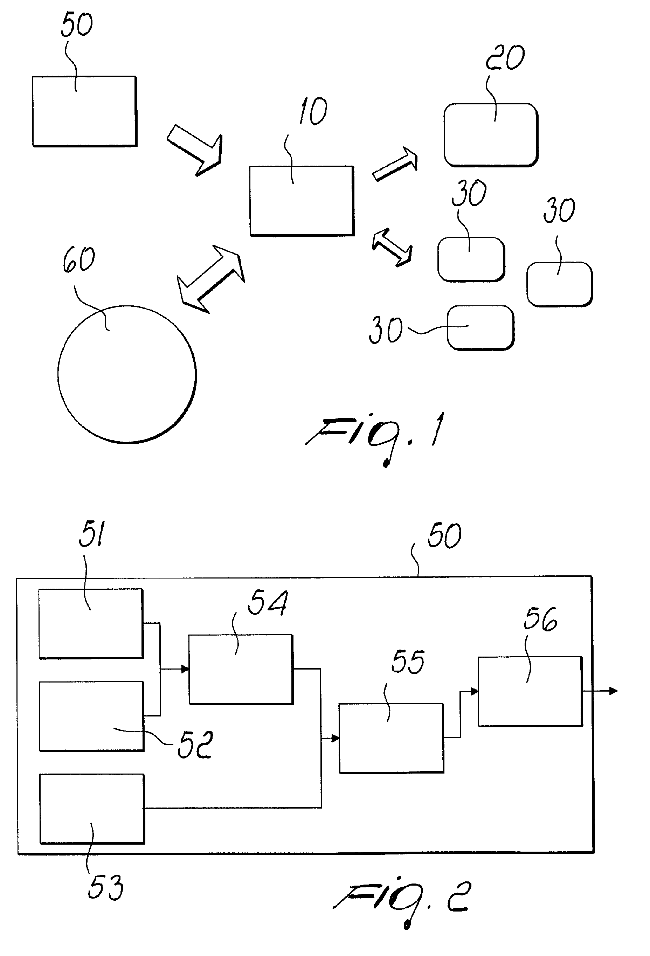

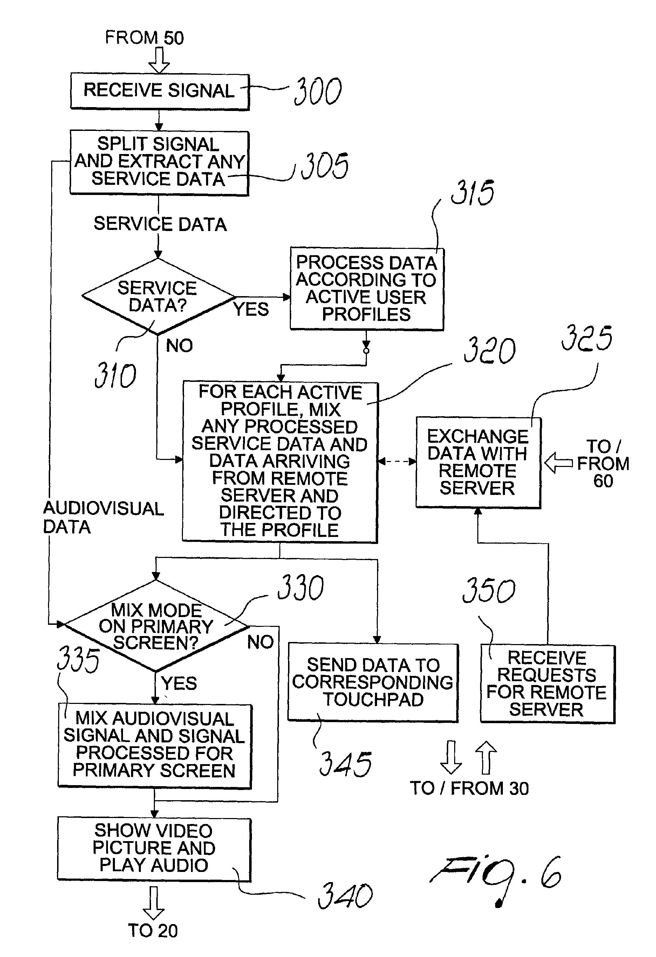

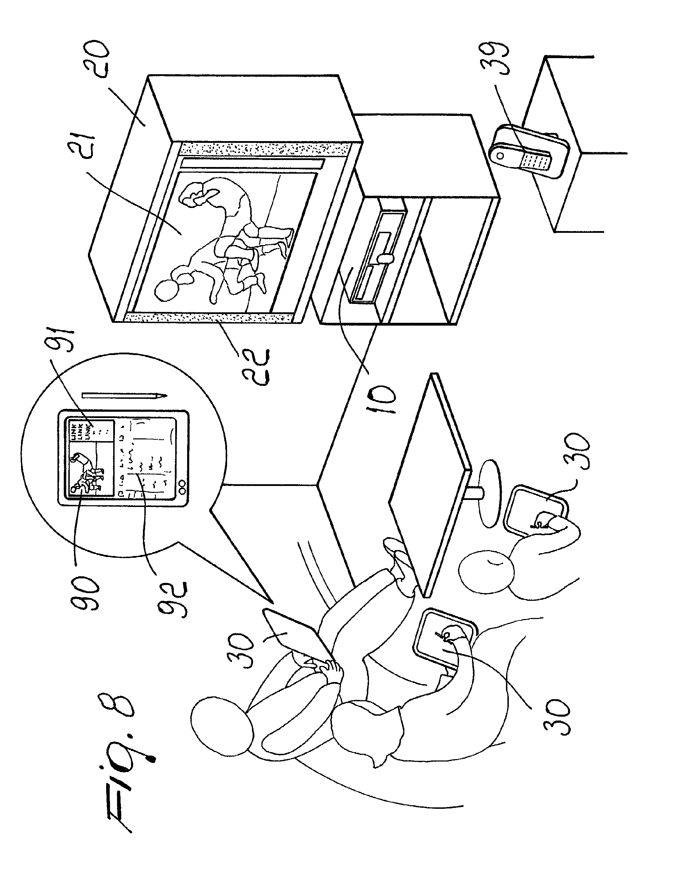

Figures 1 and 8 are general diagrams of a preferred embodiment of the system to which the present description refers. The system comprises a generic television transmitter 50, a receiving apparatus 10, a primary display device 20, for example a television set or a monitor connected in output to the receiving apparatus 10, a plurality of display and control devices 30, a data communications network 60 comprising a plurality of sites 75 and a server of a service provider 70.

The television transmitter 50, shown in detail in Figure 2, in turn comprises a source 51 of an analog or digital standard television signal; said signal includes the audio and video data that constitute the part of the program that is to be broadcast in each instant and a source 52 of service data, containing additional information that can be used during reception in order to identify the program or portion of program that is being transmitted, as described in greater detail hereinafter. There is also a Teletext data source 53, this expression being used herein to designate any type of additional signal that is already presently being broadcast by most television stations. In particular, in addition to the Teletext signal that is conventionally available in analog communications, reference is also intended to all the additional data that are transmitted with digital television and allow, for example, to have information on the current television program, albeit in a non-interactive manner.

Figure 2 further illustrates a first signal mixer 54, a second signal mixer 55 and a transmission device 56. It should be noted that the two mixers 54 and 55 can also be constituted by a single mixer.

Figure 3 illustrates the essential components of a receiving apparatus 10 according to the invention, which is hereinafter designated by the expression "set top box".

In the present context, the expression "set top box" is used to designate both a complete receiving apparatus and an additional module to be interfaced with existing set top boxes in order to provide the additional functionality to which the present invention relates, there being no difference from the point of view of the inventive concept.

The set top box 10, shown in detail in Figure 3, comprises a receiver 11, a splitter 12, a processing unit, which in turn comprises a CPU 15 and one or more memory banks 16, electronic circuits 13 for generating a television picture directed to a primary display device 20, a remote communications device for exchanging information data over a data communications network 60, for example the Internet, and a local communications device 18 for transmitting a signal to a plurality of display and control devices 30. The data communications network can also be used for conventional telephone communications by providing a so-called web phone 95, particularly if the connection between the set top box and said network is of the permanent type.

The memory 16 is constituted by any combination of ROM memory, RAM memory, EPROM memory and mass storage units, such as for example a hard disk or any other similar medium.

The communications device 17 can be a modem, an ISDN adapter, a network card, an ADSL or DSL adapter, or any other device required to operate on the communications channel 81, which can be a cable or over-the-air channel.

The set top box 10 is connected in output to a primary display device 20, shown in Figure 4b, such as for example a television set or a monitor provided with a screen 21, and to an audio playback device, for example loudspeakers 22, which can be included optionally in the primary display device itself.

The set top box 10 is furthermore connected bidirectionally, in output and in input, to a plurality of display and control devices 30, shown schematically in Figure 4a, which comprise a communications interface 31, a screen 32, control means 33, a processing unit 34, memory means 35, and optionally audio playback means 36.

Moreover, the set top box 10 can receive commands from said display and control devices 30 and from conventional remote control means, which are not shown.

Communication from and toward the communication and control devices 30 is provided by means of one or more interface cards 18, located in the set top box, and the communications interface 31 located on each individual device 30.

Said interfaces 31 can be provided in various manners, depending on the performance and cost to be achieved: for example, with a simple cable connection or by infrared or radio communication.

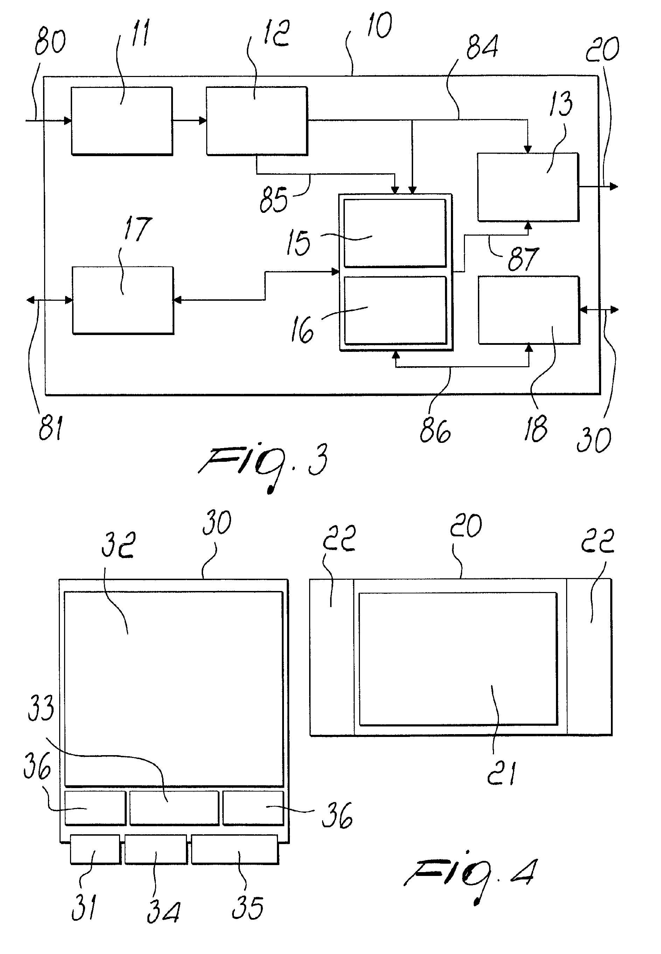

As regards the communications device 17, it allows to navigate a data communications network 60, shown schematically in Figure 5, particularly the Internet. The data communications network 60 comprises in general a plurality of generic websites 65, which can be accessed normally by users. A server 70 might also be connected to the network, said server being managed by a service provider and running a software application capable of interacting with databases 71 and 72 and, optionally, with additional databases managed by external service providers 75, whose purpose will become better apparent from the description that follows.

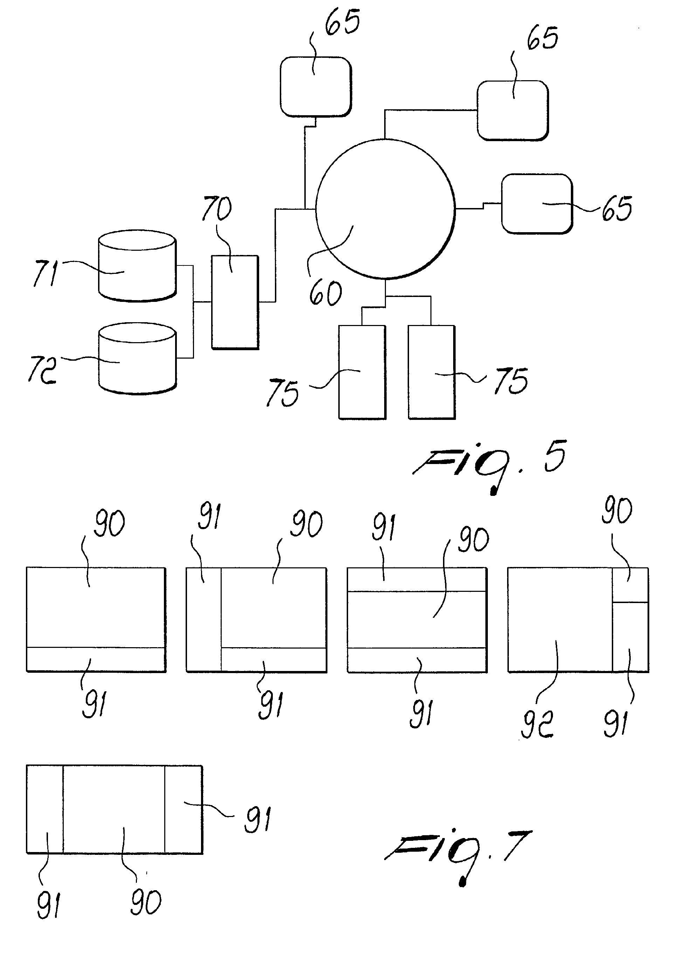

The operation of the system according to the present invention, shown schematically and partially in the flowchart of Figure 6 with reference to the reception step, is now described. It should be noted that in the description and in the figures, the same identification numeral is used to designate both a given communications channel and the data exchanged over that communications channel.

The television signal in output from the source 51 and the service data in output from the source 52 are mixed by means of a first mixer 52, so as to obtain a single signal comprising both data sets.

Mixing can be performed in various manners, depending on the type of television signal being transmitted. In particular, in the case of a digital signal, it is sufficient to provide alongside the audiovisual data a portion of service data, in a conventional manner, as normally implemented in the current art.

In the case of analog-type transmissions, but also of digital transmissions, a preferred embodiment instead provides for inserting the service data in the audio signal, in an audio frequency band that is not detectable by the human ear. This encoding technique consists, for example, in encoding the signal in the ultrasound frequency range or in encoding at low frequencies (<40 Hz). As an alternative, in order to render the additional signal inaudible, it is possible in any case to encode the service data in the audible range but emit the signal at a level that is significantly lower than the level of the sound to be played back, for example with a volume that is approximately 40-60 dB lower.

The mixing of audiovisual data and service data, represented schematically by the block 54 of Figure 2, can be performed at two different times: in real time, during transmission, or by preparing the signal in advance.

The first case is more useful for informational programs, newscasts, debates, talk shows, sports events, in which it is desirable to be able to define and send service data at significant times according to how the program develops.

For example, during a newscast, it is possible to send service data that allow the user to acquire more in-depth information on the news item, and in the case of a sports event it is possible to send service data that allow the user to display information related to an athlete being pictured, classifications, statistical data, and so forth.

The premixing of audiovisual data and service data is instead preferable for all programs that provide for prerecorded audiovisual data, with particular reference to advertising spots.

For example, the client of an advertising spot can provide service data that allow to point directly to a site of the client, allowing the user to acquire more information he is interested in or to access a currently available promotion in an immediate manner, acting as described hereinafter.

The signal thus mixed is then optionally passed through the second mixer 55 and mixed with the Teletext data that arrive from the source 53, if said Teletext data are provided.

The signal 80 thus mixed, which comprises audiovisual data and service data and, optionally, Teletext data, is passed to the transmitting device 56 and sent over the air or by means of similar television communications systems, for example by cable, in order to be received by the receiving apparatus 10.

The signal sent by the transmitter 50 is received (300) in input, over the channel 80, by the receiver 11 and is separated (305) into its audio/video and service data components by the splitter 12. The block 12 thus identifies both the conventional electronic circuits capable of separating the television signal 51 from the service data 52 in the case of digital transmission and circuits, which are also known, capable of extracting the service data 52 encoded in the ultrasound frequency range in the case of analog or digital transmission. The service data 85, if present (310), are routed to the processing unit 14, which processes them (315) according to the various user profiles that are currently active.

A user profile is a set of information that allows to identify the type of user who is using the primary screen 20 or a control and display device 30.

A user profile can be provided in any suitable manner according to the service data that one wishes to transmit and receive. For example, a first high-level division among users can occur by preselecting a basic profile among those available in the system, such as "MAN", "WOMAN", "BOY", "GIRL", "JUNIOR", and so forth. Moreover, each user can create his own personal profile derived from one of the preset profiles.

Such preset profiles are preferably stored in a portion of the memory 16 and can be modified by means of information transmitted in the television signal, if it is digital, or sent by a management server over the data communications network 60. When a user accesses a display and control device 30, the device 30 exchanges information with the set top box 10, signaling its own identification code and receiving, over the interface 18, the available user profiles, which are displayed on the screen 31. The user can thus select, by means of the pointing and control means 33, his own profile, which is associated with the identification code of the display device 30 that he controls. Moreover, one or more of the display and control devices can also be used to control the signal stream on the primary screen 20 in order to display additional information visible to all.

The information to be generated according to the profile can be encoded in the service data themselves, which tell the processing means 14 to display, for example, a string of text or a link depending on the type of active profile both as regards the primary screen (television set) and as regards the display and control devices 30, as will become better apparent in the examples that follow.

At any time (325), the processing unit 14 can process and exchange information data over the communications channel 81 and information which also arrives from a data communications network 60, for example the Internet, either at the user's request or spontaneously, in order to generate a second output signal 86 and/or a third output signal 87.

The audiovisual signal 84 is optionally also passed in input to the processing means 14, and said signal is thus mixed with the information processed starting from the service data 85 and the information that arrives over the channel 81.

The second signal 86 thus processed is passed to one or more local communication devices 18, which send (345) the signal 86 to the display and control device 30 that corresponds to a certain profile.

At the same time, the local communication device 18 is capable of receiving (350) commands on the part of each control device 30, which substantially comprise instructions for navigating the connected data communications network 60, as will become better apparent in the examples that follow.

The processing means 14 can also generate a third signal 87, which is directed to the main screen 21; said signal 87, if the choice (330) has been made to activate a mixed display mode on the main screen, is mixed (335) with the audiovisual signal 84 by means of the mixer 13 and sent in output from the set top box 10 in order to be displayed and played back (340) on the video device 20 and audio device 21, simultaneously with, or as an alternative to, the image and sound contained in said television signal 84.

The system according to the present invention therefore allows to use the information retrieved by means of the service data in order to provide new services, both of a purely informational type for the user's benefit and of a commercial type for the benefit of users and providers.

Some examples of use, which clarify the operation of the system according to the invention, are given hereinafter. The following examples are given merely by way of example and must not be considered as limiting in any way the teachings of the patent.

### Example 1: transmission of advertising information

A client advertising orange juices provides the transmitter 50 with the advertising spot containing the audiovisual data 51, which are then reproduced on the normal television sets 20 of the viewers. The advertising spot also contains service data 52, encoded within the audiovisual signal in the form of information that cannot be detected by the human ear. Said service data contain a link to a service that provides multimedia content, for example to be applied to a website, a WAP service or any other system made available over any external wired or wireless data communications network.

The transmitter 50, at the time set in the programming schedule of the television channel, sends the signal 80, which is received by the receiving apparatus 10. If the receiving apparatus is a normal television set, the video is displayed on the screen of the user in a conventional manner, the corresponding sound is played back normally, and the service data are ignored.

If instead the receiving apparatus is a set top box 10 according to the present invention, the splitter 12 extracts the transmitted service data and passes them to the processing unit 14.

The processing unit 14 reads the information contained in the service data and generates the second signal 87, optionally mixing data that arrive from the data communications network 60, and passes said information to the local communication device 18, which sends the signal to the connected display and control device 30. Accordingly, the transmitted link, for example "www.orange-juices.com", thus appears on the screen 33, and the user can select it in order to access the referenced page, which can be accessed by means of the remote communications device 17 and the network 60. The selection means are preferably constituted by a touch-screen, by touching the surface of which it is possible to give commands to the device.

The service data can contain, as mentioned, data that are differentiated by profile. For example, the data encoded within the advertising spot might contain the following information: "JUNIOR: www.orange-juices.com\junior", "MAN: www.orange-juices.com\man", "WOMAN: www.orange-juices.com\woman", "DEFAULT: www.orange-juices.com".

At the same time, if the mixed display mode has been activated by the primary profile, i.e., the profile that also controls the main screen 21, the processing means 14 generate a third signal 87 to be sent to the mixer 13, which mixes it with the audiovisual signals 84, inserting additional information on the screen 20, to be displayed for example with the already mentioned PIP technique or by partially superimposing it on the video image.

### Example 2: collection of statistical data on advertising information

The service data 84 received and optionally processed by the processing unit 14 are sent by means of the communications device 17 to the server 70 and stored in a database 71, so as to provide information on the number of users tuned to the spot or on the tuned television signal. These data can thus be easily certified by an authorized certification company.

### Example 3: collection of statistical data on television programs

By encoding service data in given points of a television program, for example a motion picture, a newscast, a soccer match, it is possible to monitor the audience totalized by a television program at a certain moment, with a considerable advantage over conventional systems, which provide for dedicated monitoring on a limited sample of individuals by means of specifically provided instruments.

### Example 4: connection of a plurality of display and control devices during a motion picture

If a plurality of display and control devices are connected, during a program it is possible to send, at regular intervals or depending on the context of the program, interactive links or information data for one or more of the provided profiles. For example, during a motion picture, the mixer 53 can be required to mix, if they are not already premixed in the signal 51, audio/video data and service data related to the starring actor, providing a differentiation according to the profile that is affected: "GIRL: www.starring-actor.com\gossip", "GRANDMA: www.starring-actor.com\oldiesgoldies" and so forth.

Each user is of course then free to use the touchpad or display and control device 30 to freely navigate the data communications network 60.

### Example 5: offline services

Another type of service made possible by the claimed invention consists in providing information that can be used completely offline. For example, during the showing of a musical program, it is possible to encode in the signal a link which allows the user, if selected, to download a sound snippet which contains a demo of the song being played at that time, and during a cultural program it is possible to receive a link for downloading a story or piece of poetry. These data are then stored within the memory of the devices 30 and can be retrieved at a later time.

In one embodiment, the data can be stored in a portion of the memory 16 of the set top box, for example on a mass storage device such as a hard disk, and transferred to a device 30 at later time at the user's request.

### Example 6: Information data received directly over the television channel

A preferred embodiment also allows to encode service data 52 within a television signal; the user can use said data to request the sending of additional information over a data communications network or to simply start a navigation of said data communications network in a point that is pertinent to the transmitted audiovisual data and is encoded within the audiovisual signal.

In a second embodiment, said service data 52 are used to provide the user automatically with information on the program to which he is currently tuned, for example the synopsis of a motion picture during its showing, data related to a championship during a match, stock exchange data during a financial program, the presenter's file or trivia during a quiz show or talk show, said information being differentiated according to the selected user profile.

The displayed information is retrieved for example in the database 72 by an appropriately provided software application, which has the task of retrieving data associated with the program that the user is viewing by comparing the time, date and channel data sent by the set top box 10 at a given instant or simply by comparing the program code encoded in the service data with the codes stored in tables in the database 72.

The information that is returned can be static or dynamic, where the term "dynamic" is used to indicate that the information can vary moment by moment depending on the time at which it is retrieved (for example in the case of stock quotes or results of other soccer matches). In both cases, the information can be retrieved directly from a second database 72 managed by the server 70 or from additional servers or websites 75 managed by service providers.

According to a first illustrated embodiment, the database 72 comprises at least the following fields: "channel", "time", "date", "profile" and "info pointer". The first four fields constitute a primary key of the database to be used to search for the location from which to download the information related to the program to which the set top box 10 is currently tuned. The fifth field is indeed the pointer to the local or remote location from which the information to be returned to the set top box is to be retrieved.

A second embodiment uses a recognition identifier encoded together with the service data 52, so that a table of the database 72 comprises the "program_identifier", "profile", "info pointer" fields.

The information that is sent can of course be of various kinds: purely passive, for example simple data to be displayed, such as the title of the program, its duration and so forth, or interactive, for example a link to a website, which is meant to be displayed on the screen 20 of the user and is therefore selectable by means of one of the display and control devices 30.

In a different embodiment of the present invention, which can be used as an alternative, or as an integration, to the above described embodiment, the information related to specific programs can be found directly in further data made available to the set top box 10 over the television communication channel 80, such as typically the Teletext data 53, where this term is used to designate the concepts that have already been explained.

For example, the memory 16 can contain information, which may also be remotely modifiable by sending appropriate commands from the server 70 or by updating its content by means of commands sent in a known manner by the station 50 itself in the case of digital broadcasts, said information being related to the structure of the Teletext data of the station to which the receiver 11 is currently tuned, so as to retrieve information to be displayed together with the video signal 84; said information also being stored fully or partially in the memory 16.

For example, during the showing of a motion picture, the user can use his own display and control means 30 in order to request its synopsis, if available; said synopsis can be retrieved directly from a given page of Teletext itself. Or, during the transmission of a financial newscast, the set top box can scroll on the screens 31 of the devices that have requested it the information related to stock exchange data received in some pages of said Teletext. The Teletext of each station in fact tends to maintain a structure that is constant over time, thus requiring only occasional updates to the memory 16 on the part of the server 70 or of the station 50.

Moreover, it is evident that any kind of information can be displayed at a certain instant on the screen 20 or on the display and control devices 30: for example, weather information, program schedules, and so forth, as well as specific pages requested by the user by means of the input devices 30. Finally, the set top box thus conceived can of course also be used as a replacement of Teletext itself.

In each one of the cases described above by way of non-limitative example, the processing unit 14 produces in output audio/video information 87, which is mixed with the audio/video information related to the television signal 84 by means of conventional electronic circuits 13, and is then sent toward the display means 21 and audio playback means 22, and signals 86, which are instead sent to the screen 32 of each user connected by means of the interfaces 18-31.

The mixing of the information on the part of the circuits 13 can generate a display on the device 20 according to different modes: a first mode, in which only the television signal 84 is shown; a second mode, in which only the signal 87 is shown; a third mode, in which both signals 84 and 87 are shown, optionally after resizing the picture that contains the television signal.

Figure 7 illustrates different possible combinations between the area 90 for displaying the television signal 84 and the area 91 for displaying the signal 87, which can also be applied with reference to the screen 31 of the display devices 30.

In particular, Figure 7d illustrates a case in which there are more than two information sources, for example the case in which the television signal 84 is shown in the area 90, the additional signal 87 is shown in the area 91, and the conventional Teletext signal is shown in the area 92.

In particular, a division of the screen into at least three areas is particularly indicated with reference to the screens 31 of the display and control devices 30 when the signal 86 in output from the local communication device 18 also comprises audio-video data.

In this case, a first area is reserved for displaying the video data transmitted by the transmitter 50, a second area is reserved for displaying the information contained in the service data after optional processing on the part of the processing means 14, and a third area is reserved for displaying the information that arrives from the data communications network 60.

The configurations shown are of course given only by way of demonstration. In particular, furthermore, the areas into which the screen is divided can be overlapped transparently in order to generate superimposition effects, and the area 90 for displaying the television signal can be resized or kept at its normal size, also depending on the type of screen used and on the received television signal 84. With reference to Figure 7c, for example, in the case of the transmission of a program in 16:9 format, displayed on a conventional screen in 4:3 format or on a touchpad with a screen having similar proportions, the presence of the areas 91 does not require resizing of the television picture 90, since it is possible to utilize the two excess upper and lower horizontal bands. The same applies to Figure 7e in the case of the reception of a 4:3 television signal displayed on a 16:9 screen.

It should be noted that the same remarks apply equally to the screen 21 of the primary display device 20 and to the screens 32 of the display and control devices 30, and that the areas in which the screen is divided can be more than three. For example, in addition to the areas that have already been indicated, or as an alternative thereto, there can be an area that is dedicated to the display of "forced" information, for example an advertising message of an advertiser who sponsors the current program.

In this case, the area involved must be always completely visible and it must be impossible for the user to eliminate from an information-technology standpoint, so as to give assurance to the advertiser that the advertising message has been seen. Said area can be used not only for advertising purposes but also for broadcasting informational messages, and can be generated either at the hardware level, with known signal mixing circuits and circuits for generating video pictures of the PIP type, or at the software level, by means of known calls to functions made available by the various operating systems and invoked by the software for managing the display and control devices.

It has thus been shown that the present method and system achieve the intended aim and objects. In particular, it has been shown that the set top box thus conceived allows to provide an effective interactive television system that overcomes the limitations found in the current art, allowing true interactivity with what is shown on the screen and ensuring independence of operations and navigation to the various users, allowing to supply services of the informational and/or interactive type. Clearly, numerous modifications are evident and can be promptly performed by the person skilled in the art without abandoning the scope of the protection of the present invention. In particular, it is evident that the underlying inventive concept of the present invention is independent of the physical location and of the manner in which processing of the service data is performed in order to retrieve information related to the programs that have been sent, said processing being executable directly on the set top box 10 or on the server 70 by means of a software program or by means of an appropriate hardware chipset capable of autonomously identifying and handling the content of the service data, which can be in any suitable format. Therefore, the scope of the protection of the claims must not be limited by the illustrations or preferred embodiments illustrated in the description as examples; rather, the claims must comprise all the patentable novelty characteristics that reside in the present invention, including all the characteristics that would be treated as equivalents by the person skilled in the art.

The disclosures in European Patent Application No. 01830467.5, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An apparatus for interactive television, **characterized in that** it comprises:
-- a plurality of display and control devices (30):
-- a receiver (11), which is suitable to receive a television signal (80) which comprises video data, audio data and service data;
-- a splitter (12), suitable to separate said audio and video data (84) and said service data (85);
-- processing means (14) for generating a second signal (86), whose content is based on decoded information contained in said service data (85);
-- one or more local communications interfaces (18), suitable to transmit said second signal (86) to said plurality of display and control devices (30).

2. The apparatus according to claim 1, **characterized in that** said second signal (86) comprises said audio and video data (84).

3. The apparatus according to claims 1 or 2, **characterized in that** said processing means (14) are suitable to generate a third signal (87), the content of which is based on information contained in said service data (85).

4. The apparatus according to claim 3, further comprising means (13) for generating a video picture which comprises information contained in said video signal (84) and in said third signal (87);

5. The receiving apparatus according to any one of the preceding claims, comprising communication means (17) for exchanging information data (81) with a remote location (70, 75).

6. The receiving apparatus according to claim 5, **characterized in that** said second signal (86) and/or said third signal (87) comprise information processed starting from said service data (85) and from said information data (81).

7. The receiving apparatus according to claim 5, **characterized in that** said communication means are selected from the group that comprises:
-- a modem; an ADSL adapter; a DSL adapter; an ISDN adapter; a generic network card suitable to send and receive a signal over a data communications network.

8. The receiving apparatus according to claim 5 or 7, **characterized in that** said means (14) for generating a second signal (86) and a third signal (87) use data contained in at least one of the following: a local memory; a remote server; a website; additional information contained in said service data.

9. The receiving apparatus according to any one of the preceding claims, **characterized in that** said second signal (86) includes data which, once displayed on one of said display and control devices (30), can be selected by means of a pointing device in order to produce an exchange of data (81) with a location (70, 75) that is remote with respect to said receiving apparatus (10).

10. The receiving apparatus according to one of the preceding claims, **characterized in that** said service data (85) are encoded as audio information within said television signal (84).

11. The apparatus according to one of the preceding claims, **characterized in that** said display means (30) comprise:
-- a screen (31) for displaying said second signal (86);
-- means (32) for controlling the interaction with the information displayed on said screen (31).

12. The apparatus according to claim 11, **characterized in that** said screen (31) comprises:
-- an area (90) for displaying said video data;
-- an area (91) for displaying said service data;
-- an area (93) for displaying said information that arrives from a remote location.

13. The apparatus according to claim 11, **characterized in that** said display means (30) comprise:
-- memory means (33) for saving information contained within said second signal (86);
-- control means (32) for interaction with the information displayed on said screen (31).

14. A method for interactive television, comprising the steps of:
-- receiving, by means of a receiving apparatus, a television signal (80) which comprises at least audiovisual data and service data;
-- separating said audio and video data (84) and said service data (85);
-- generating a second signal (86), whose content is based on decoded information contained in said service data (85);
-- transmitting said second signal (86) to a plurality of display and control devices (30).

15. The method according to claim 14, **characterized in that** said second signal (86) comprises said audio and video data (84).

16. The method according to claims 14 or 15, further comprising the step of generating a third signal (87), whose content is based on information contained in said service data (85).

17. The method according to claim 16, further comprising the step of generating a video picture which comprises information contained in said video signal (84) and in said third signal (87).

18. The method according to any one of claims 14-17, further comprising the step of exchanging information data (81) with a remote location (70, 75).

19. The method according to claim 18, **characterized in that** said second signal (86) and/or said third signal (87) comprise information processed starting from said service data (85) and from said information data (81).

20. The method according to claim 18, **characterized in that** said means (14) for generating a second signal (86) and a third signal (87) use data contained in at least one of the following: a local memory; a remote server; a website; additional information contained in said service data; additional information contained in said received television signal, particularly Teletext data.

21. The method according to one of the preceding claims, **characterized in that** said service data (85) are encoded as audio information within said television signal (84).
